# EUROPEAN PATENT SPECIFICATION

(11) **EP 0 702 664 B1**
(45) Date of publication and mention of the grant of the patent: **28.01.1998**
(21) Application number: 94920686.6
(22) Date of filing: 27.05.1994
(51) Int. Cl.: C03C 14/00, C04B 35/80

(54) **SILICON CARBOXIDE COMPOSITE REINFORCED WITH CERAMIC FIBERS HAVING A SURFACE ENRICHED IN BORON NITRIDE**
SILICUMCARBOXID-FORMKÖRPER, VERSTÄRKT MIT KERAMISCHEN FASERN DEREN OBERFLÄCHE EINE BORNITRIDANREICHERUNG AUFWEIST
MATERIAU COMPOSITE DE CARBOXYDE DE SILICIUM RENFORCE DE FIBRES DE CERAMIQUE ET DONT LA SURFACE EST ENRICHIE DE NITRURE DE BORE

(30) Priority: 27.05.1993 US 68356; 25.05.1994 US 248903
(43) Date of publication of application: 27.03.1996
(73) Proprietor: AlliedSignal Inc., Morristown, New Jersey 07962-2245 (US)
(72) Inventor: CAMPBELL, Scott, Sager, Chicago , IL 60618 (US); SIKONIA, John, George, Long Valley, NJ 07853 (US)
(74) Representative: Hucker, Charlotte Jane
(86) International application number: US9405997
(87) International publication number: WO9427923

(56) References cited:
- WO-A-90/12835
- FR-A- 2 647 777
- GB-A- 2 266 302
- US-A- 4 605 588
- US-A- 5 132 254
- US-A- 5 164 341
- CERAMIC ENGINEERING AND SCIENCE PROCEEDINGS, vol.12, no.7/8, 1991, COLUMBUS US pages 1292 - 1303 F.I.HURWITZ ET AL. 'polymeric routes to silicon carbide and silicon oxycarbide cmc'

## Description

### Prior Art

The invention relates generally to composites in which a matrix material is reinforced with fibers. Composites with a polymer matrix are widely used for various purposes, but they are not generally applicable in situations where temperatures are expected to be above about 300°C. The present invention relates to ceramic fiber reinforced-glass matrix composites having application at temperatures which would destroy conventional polymeric materials.

Matrices have been suggested for use with fibers having high strength at elevated temperatures. Examples of such matrix materials are the glass and glass ceramics (Prewo et al., Ceramic Bulletin, Vol. 65, No. 2, 1986).

In U.S. Pat. No. 5,242,866 and related US Pat. No. 5,328,976 a ceramic composition designated "black glass" is disclosed which has an empirical formula SiCxOy where x ranges from 0.5 to about 2.0 and y ranges from about 0.5 to about 3.0, preferably x ranges from 0.9 to 1.6 and y ranges from 0.7 - 1.8. Such a ceramic material has a higher carbon content than prior art materials and is very resistant to high temperatures - up to about 1400°C. This black glass material is produced by raacting in the presence of a hydrosilylation catalyst a cyclosiloxane having a vinyl group with a cyclosiloxane having a hydrogen group to form a polymer, which is subsequently pyrolyzed to black glass. Related black glasses are disclosed in US Pat. No. 5,340,777 where cyclosiloxanes are polymerized with non-cyclic siloxanes and then pyrolyzed to form a black glass. The present invention involves the application of such black glasses to reinforcing fibers to form laminates very useful in high temperature applications.

In co-pending U.S. Pat. No. 5,486,250 composites of refractory fibers with a black glass matrix were disclosed. Such composites have good physical properties but tend to exhibit brittle fracture with little evidence of fiber pullout.

Ceramic matrix composites which combine whiskers, particulates, staples, or continuous fibers with ceramic matrix offer a potential to overcome the catastrophic brittle failure inherent to monolithic ceramics. Among these reinforcement types, continuous fiber is the most effective means known for toughening ceramics. If brittle fracture is replaced by the graceful fibrous fracture, ceramic composites may be used reliably as an engineering material for structural and other high performance applications.

The type of failure is to large extent determined by the nature of the interface between the reinforcement fiber and the surrounding matrix. In ceramic composites, high toughness results when energy is absorbed as fibers pull out from the matrix as the composite cracks. Thus, a low interfacial stress or friction is needed to ensure fibrous fracture. If a strong interfacial bond exists, the crack will cut through the fiber without pulling out the fiber, resulting in a fracture behavior not much different from unreinforced monolithic ceramics. In co-pending U.S. Pat. Nos. 5,512,359 and 5,468,318 the use of a carbon interface in a silicon carboxide "black glass" matrix was shown to produce a composite having a high strain-to-failure and exhibiting fibrous fracture. Our present invention relates to the use of boron nitride interface in a silicon carboxide black glass matrix, which also produces a composite having improved strength at temperatures higher than those in which a carbon interfacial layer is useful.

Boron nitride coatings have been used for providing toughness to fiber-reinforced ceramic composites. Illustrative are U.S. Pat. Nos. 4,642,271, 4,906,763, and 4,915,760. Various methods of applying boron nitride coatings to the individual fibers are disclosed. Chemical vapor deposition using borazine or borazine compounds appear to be favored, but other reactions have been suggested such as reacting boron oxide with ammonia or boron trichloride with ammonia. Boron nitride coated fibers have been incorporated into a variety of matrices, including silicon carbide, zirconia, cordierite, and silicon nitride.

In co-pending U.S. Pat. No. 5,354,602 the use of boron nitride coatings for black glass composites was suggested, with the preferred methods being chemical vapor deposition or coating fibers with boron-containing precursors followed by nitridation with N₂ or NH₃.

The process of U.S. 4,605,588 and U.S. 4,948,662 has now been investigated and it has been found to be useful for preparation of black glass composites reinforced with boron-containing ceramic fibers such as Nextel™ but unexpectedly, the conditions required were outside those patents. It has now been found that the physical properties of black glass composites can be further improved by controlled oxidation.

In Ceramic Industry, March 1994, reference is made to the process developed by the present inventors and it is stated that "long-term" studies show that the oxidation of composites results in higher failure strains, improved fiber pull-out and lower moduli. However, as will be shown below, short term oxidation can provide improved performance in composites before they are placed in service.

US-A-4605588 discloses an aluminoborosilicate glass fiber having a uniform boron nitride coating, and which is useful for reinforcing ceramics and glasses to increase their toughness.

US-A-5132254 discloses ceramic composites comprising a matrix phase of a silicate glass or glass-ceramic reinforced with carbon fibers having a protective boron nitride surface coating. Such composites are said to have substantially improved mechanical properties at high temperatures.

US-A-5164341 discloses ceramic composites comprising a substantially non-porous alkaline earth aluminosilicate glass-ceramic matrix reinforced with boron nitride-coated silicon carbide fibers. Such composites are said to exhibit unexpectedly good resistance to high-temperature degradation.

### Summary of the Invention

In general, the invention is a fiber-reinforced glass ceramic composite in which the reinforcing fibers are boron-containing alumina-silica refractory fibers which have been nitrided at conditions which have been selected to enrich the surface of the fibers in boron nitride and thereby to achieve fibrous fracture when the composite is stressed, rather than brittle failure.

An improved fiber, reinforced glass composite of the invention comprises (a) a boron-containing alumina-silica refractory fiber, particularly, Nextel™ 312 which is nitrided at conditions selected to provide a surface enriched in boron nitride and achieve fibrous fracture and, (b) a carbon-containing black glass ceramic composition having the empirical formula SiCxOy where x ranges from about 0.5 to about 2.0, preferably from 0.9 to 1.6, and y ranges from about 0.5 to about 3.0, preferably from 0.7 to 1.8. The composite of the invention fails under stress in a fibrous rather than a brittle manner.

The refractory fibers are nitrided with ammonia to produce a Surface enriched in boron nitride prior to fabrication and pyrolysis of the cyclosiloxanes to form the black glass matrix. Preferred conditions for forming such boron nitride coatings are nitridation with 5-100% NH₃ at temperatures of about 1125°C to 1250°C, preferably 1125°C to 1175°C for 10 to 70 minutes, preferably 10 to 40 minutes.

Subsequent to the nitridation step, additional improvement in the physical properties of black glass composites can be accomplished by controlled oxidation at temperatures up to 800°C for from 5 to 200 hours, generally 500° to 800°C, and preferably 600° to 700°C for 20 to 100 hours, which can improve the stress-strain properties. Under some circumstances it is possible to prevent brittle failure resulting from insufficient nitridation.

In a preferred embodiment, the black glass ceramic composition (b) of the invention is the pyrolyzed reaction product of a polymer prepared from (1) a cyclosiloxane monomer having the formula 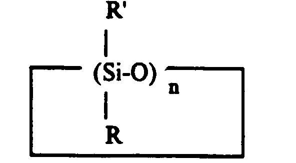 where n is an integer from 3 to about 30, R is hydrogen, and R' is an alkene of from 2 to about 20 carbon atoms in which one vinyl carbon atom is directly bonded to silicon or (2) two or more different cyclosiloxane monomers having the formula of (1) where for at least one monomer R is hydrogen and R' is an alkyl group having from 1 to about 20 carbon atoms and for the other monomers R is an alkene from about 2 to about 20 carbon atoms in which one vinyl carbon is directly bonded to silicon and R' is an alkyl group of from 1 to about 20 carbon atoms or (3) cyclosiloxane monomers having the formula of (1) where R and R' are independently selected from hydrogen, an alkene of from 2 to about 20 carbon atoms in which one vinyl carbon atom is directly bonded to silicon, or an alkyl group of from 1 to about 20 carbon atoms and at least some of said monomers contain each of said hydrogen, alkene, and alkyl moieties, said polymerization reaction taking place in the presence of an effective amount of hydrosilylation catalyst. The polymer product is pyrolyzed, preferably in an inert atmosphere, or in an oxygen-containing atmosphere at a rate exceeding 5°C/min to a temperature in the range of about 800°C to about 1400°C to produce the black glass ceramic.

In another aspect of this invention, the black glass ceramic composition (b) is the pyrolyzed reaction product of a polymer prepared by reacting in the presence of a catalytically effective amount of a hydrosilylation catalyst
(1) cyclosiloxanes of formula 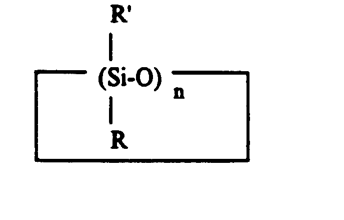 where n is an integer from 3 to about 20, R and R' are independently selected from hydrogen, an unsubstituted vinyl group, a substituted vinyl group, an alkyl group having 1 to 20 carbon atoms, or aryl and where said siloxane contains at least two of either or both of hydrogen and unsubstituted or substituted vinyl groups and
(2) non-cyclic siloxanes having the formula 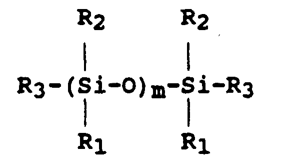 where
   R₁, R₂, and R₃ are independently selected from hydrogen, an unsubstituted vinyl group, a substituted vinyl group, an alkyl group having 1 to 20 carbon atoms or aryl and where said siloxane contains at least two of either or both of hydrogen and unsubstituted or substituted vinyl groups
   m is an integer from 0 to 1,000
   and thereafter converting the polymer to a black glass by heating in an inert atmosphere to a maximum temperature in the range of 750°C to 1400°C or in an oxygen-containing atmosphere to the same temperature range at a rate exceeding 5"C/min. The siloxanes of (2) are intended to include both linear siloxanes and their branched equivalent structures. In the special case where m is zero, the non-cyclic siloxane (2) becomes a silane having only one silicon atom.

In one alternative embodiment, a precursor polymer is produced by reacting the non-cyclic siloxanes described in (2) above (or a branched equivalent) in the absence of the cyclosiloxanes of (1) above. Such polymers are then pyrolyzed as described above to create a black glass.

In another embodiment, the invention comprises a method of preparing a fiber reinforced glass composite wherein the siloxane reaction product described above is combined with the nitrided boron-containing refractory fibers which may be in the form of woven fabric, unidirectionally aligned fibers or chopped fibers and whiskers. Plies of the boron nitride enriched fibers may be laid-up to form a green laminate and thereafter pyrolyzed, preferably in a non-oxidizing atmosphere at a temperature between about 800°C and about 1400°C, preferably about 850°C, to form the black glass composite. The laminate may be reimpregnated with polymer solution and repyrolyzed in order to increase density. Alternatively, a resin transfer technique may be used in which fibers surface-enriched in boron nitride are placed in a mold and the black glass matrix precursor is added to fill the mold before curing to form a green molded product.

These fiber reinforced black glass composites show flexural strength greater than about 170 MPa at room temperature and fibrous, graceful fracture. A three-fold increase in flexural strength and a four-fold increase in strain at maximum stress has been obtained as compared with black glass composites where the boron-containing fibers have not been nitrided according to the invention. Further improvement is achieved by briefly oxidizing the composites as initially prepared.

### Brief Description of the Figures

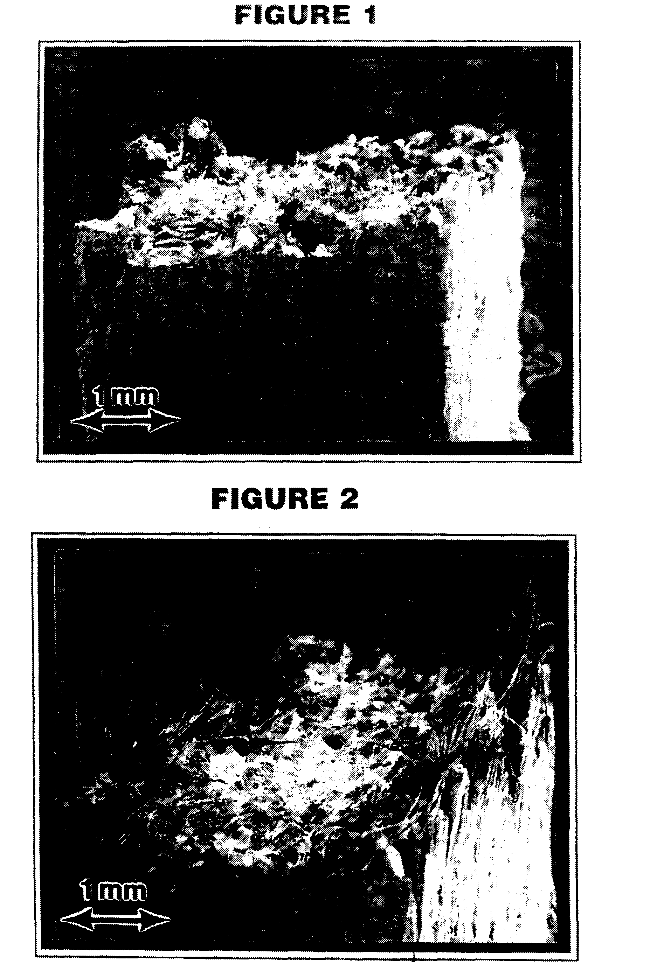

Figure 1 is a photomicrograph of a fractured specimen of a Nextel™ 312 reinforced black glass composite as prepared.

Figure 2 is a photomicrograph of a fractured specimen of a Nextel™ 312 reinforced black glass composite after oxidation at 600°C for 24 hours.

### Description of the Preferred Embodiments

The invention broadly speaking is a fiber-reinforced glass ceramic composite which achieves fibrous fracture rather than brittle fracture under stress by using boron-containing alumina-silica refractory fibers which have been nitrided under conditions which enrich the fiber surface in boron nitride. The preferred matrix material is a black glass ceramic as described below.

### Black Glass Ceramic

The black glass ceramic used as the matrix has an empirical formula SiCxOy wherein x ranges from about 0.5 to about 2.0, preferably 0.9 - 1.6, and y ranges from about 0.5 to about 3.0, preferably 0.7 - 1.8, whereby the carbon content ranges from about 10% to about 40% by weight. The black glass ceramic is the product of the pyrolysis, preferably in a non-oxidizing atmosphere at temperatures between about 800°C and about 1400°C of a polymer made from certain siloxane monomers. If oxygen is present during pyrolysis, the heating should be carried out at a rate of at least 5°C/min to limit the oxidation of carbon.

The polymer precursor of the black glass ceramic may be prepared by subjecting a mixture containing cyclosiloxanes of from 3 to 30 silicon atoms alone, or mixed with non-cyclic siloxanes, to a temperature in the range of from about 10°C to about 300°C in the presence of 1-200 wt. ppm of platinum as a hydrosilylation catalyst for a time in the range of from about 1 minute to about 600 minutes. When the polymer is placed in a non-oxidizing atmosphere, such as nitrogen, and pyrolyzed at a temperature in the range from about 800°C to about 1400°C for a time in the range of from about 1 hour to about 300 hours, black glass results. The polymer formation takes advantage of the fact that a silicon-hydride will react with a silicon-vinyl group to form a silicon-carbon-carbon-silicon bonded chain, thereby forming a network polymer. For this reason, each cyclosiloxane or non-cyclic siloxane monomer will contain either a silicon-hydride bond or a silicon-vinyl bond or both. A silicon-hydride bond refers to a silicon atom bonded directly to a hydrogen atom and a silicon-vinyl bond refers to a silicon atom bonded directly to an alkene carbon, i.e., it is connected to another carbon atom by a double bond.

In one embodiment, the polymer precursor for the black glass ceramic may be defined generally as the reaction product of (1) a cyclosiloxane monomer having the formula 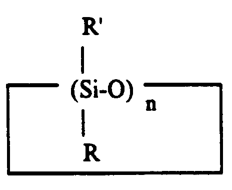 where n is an integer from 3 to 30, R is hydrogen, and R' is an alkene of from 2 to 20 carbon atoms in which one vinyl carbon atom is directly bonded to silicon or (2) two or more different cyclosiloxane monomers having the formula of (1) where for at least one monomer R is hydrogen and R' is an alkyl group having from 1 to 20 carbon atoms and for the other monomers R is an alkene from about 2 to 20 carbon atoms in which one vinyl carbon is directly bonded to silicon and R' is an alkyl group of from 1 to 20 carbon atoms or (3) cyclosiloxane monomers having the formula of (1) where R and R' are independently selected from hydrogen, an alkene of from 2 to about 20 carbon atoms in which one vinyl carbon atom is directly bonded to silicon, or an alkyl group of from 1 to about 20 carbon atoms and at least some of said monomers contain each of said hydrogen, alkene, and alkyl moieties, said reaction taking place in the presence of an effective amount of hydrosilylation catalyst.

In a second embodiment, the black glass of the invention is derived from precursor polymers prepared by the reaction of (a) cyclosiloxanes containing silicon-hydride bonds and/or silicon-vinyl bonds with (b) non-cyclic siloxanes (or silanes with one silicon atom) also having silicon-hydride and/or silicon-vinyl bonds. Such precursor polymers may be described as the reaction product of
(1) cyclosiloxanes of the formula 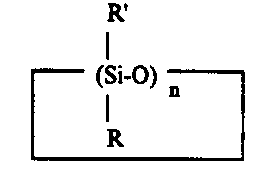 where n is an integer from 3 to about 20, R and R' are independently selected from hydrogen, an unsubstituted vinyl group, a substituted vinyl group, an alkyl group of from 1 to about 20 carbon atoms, or aryl and where said siloxane contains at least two of either or both of hydrogen and unsubstituted or substituted vinyl groups and
(2) non-cyclic siloxanes having the formula 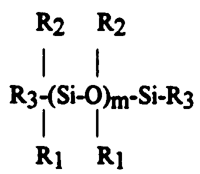 R₁, R₂, and R₃ are independently selected from hydrogen, an unsubstituted vinyl group, a substituted vinyl group, an alkyl group having 1 to 20 carbon atoms, or aryl and where said siloxane contains at least two of either or both of hydrogen and unsubstituted or substituted vinyl groups
m is an integer from 0 to 1,000
said reaction taking place in the presence of an effective amount of a hydrosilylation catalyst.

It should be noted that in one case where m=O that the "non-cyclic siloxane" of (2) is actually a silane. Accordingly, it is to be understood that silanes having a single silicon atom are included within the term "non-cyclic siloxanes" as defined herein.

The siloxane molecules (1) and (2) are linked by the reaction of a hydrogen atom from one molecule and a vinyl group from the other. It is believed that the improved high temperature performance of black glasses of the invention is related to the relatively close coupling of the silicon and carbon atoms.

While unsubstituted vinyl groups are preferred, in some instances a substituted vinyl group may be selected to create carbon less closely bound to silicon atoms. An unsubstituted vinyl group may be written as -CH=CH₂ while a substituted vinyl group may be written as -CRₐ=CR_{b}R_{c} where Rₐ R_{b}, R_{c} may be hydrogen, alkyl groups from 1 to 20 carbons, aryl, alkaryl, or alkenyl, with at least some of Rₐ, R_{b}, R_{c} being other than hydrogen. Additional carbon may be added also by including aryl groups or alkyl groups having more than 2 carbon atoms.

In one alternative embodiment, a precursor polymer is produced by reacting the non-cyclic siloxanes described in (2) above (or a branched equivalent) in the absence of the cyclosiloxanes of (1) above. Such polymers are then pyrolyzed as described above to create a black glass.

The black glass ceramic may be prepared from a cyclosiloxane polymer precursor wherein both the requisite silicon-hydride bond and the silicon-vinyl bond are present in one molecule, for example, 1,3,5,7-tetravinyl-1,3,5,7-tetrahydrocydotetrasiloxane. Such monomers may also contain alkyl groups such as for example, 1,3-divinyl-1,5-dihydro-3,5,7,7-tetramethylcyclosiloxane. Alternatively, two or more cyclosiloxane monomers may be polymerized. Such monomers would contain either a silicon hydride bond or a silicon-vinyl bond or both and the ratio of the two types of bonds should be about 1:1, more broadly about 1:9 to 9:1.

Examples of such cyclosiloxanes include, but are not limited to:
1,3,5,7-tetramethyltetrahydrocyclotetrasiloxane,
1,3,5,7-tetravinyltetrahydrocyclotetrasiloxane,
1,3,5,7-tetravinyltetraethylcyclotetasiloxane,
1,3,5,7-tetravinyltetramethylcyclotetrasiloxane,
1,3,5-trimethyltrivinylcyclotrisiloxane,
1,3,5-trivinyitrihydrocyclotrisiloxane,
1,3,5-trimethyltrihydrocyclotrisiloxane,
1,3,5,7,9-pentavinylpentahydrocyclopentasiloxane,
1,3,5,7,9-pentavinylpentamethylcyclopentasiloxane,
1,1,3,3,5,5,7,7-octavinylcyclotetrasiloxane,
1,1,3,3,5,5,7,7-octahydrocyclotetrasiloxane,
1,3,5,7,9,11-hexavinylhexamethylcyclohexasiloxane,
1,3,5,7,9,11-hexamethylhexahydrocyclohexasiloxane,
1,3,5,7,9,11,13,15,17,19-decavinyldecahydrocyclodecasiloxane,
1,3-divinyl-1,5-dihydro-3,5,7,7-tetramethylcyclotetrasiloxane,
1,3,5-trivinyl-1,3,5,7,7-pentamethylcyclotetrasiloxane,
1,3,5-trihydro-1,3,5,7,7-pentamethylcyclotetrasiloxane,
1,3,5,7,9,1 1,13,15,17,19,21,23,25,27,29-pentadecavinyl-1,3,5,7,9,11,13,15,17,19,-21,23,25,27,29-pentadecahydrocyclopentadecasiloxane,
1,3,5,7-tetrapropenyltetrahydrocyclotetrasiloxane,
1,3,5,7-tetrapentenyltetrapentylcyclotetrasiloxane,
and 1,3,5,7,9-pentadecenylpentapropylcyclopentasiloxane,
1,3,5,7,9-pentahydropentamahylcyclopentasiloxane
1,1,3,3,5,5,7,7-octahydrocyclotetrasiloxane
1,1,3,3,5,5,7,7,9,9,-decahydrocyclopentasiloxane, and
1,1,3,3,5,5,7,7,9,9,11,11-dodecahydrocyclohexasiloxane.

Examples of linear non-cyclic siloxanes are:
tetramethyldisiloxane,
hexamethyltrisiloxane,
1,1,2,3,3-pentamethyltrisiloxane,
octamethyltetrasiloxane,
polymethylvinylsiloxane,
polyhydromethyisiloxane,
heptamethyltetrasiloxane,
1,1,2,3,4,4,-hexamethyltetrasiloxane,
decamethylpentasiloxane,
1,1,2,3,4,5,5-heptamethylpentasiloxane,
1,1,3,3-tetravinyldimethyldisiloxane,
tetramethyldivinyldisiloxane,
hexamethyldivinyltrisiloxane,
1,1,2,3,3-pentamethyltrivinyltrisiloxane,
octamethyldivinyltetrasiloxane,
heptamethyltrivinyltetrasiloxane,
1,1,2,3,4,4-hexamethyltetravinyltetrasiloxane,
decamethyldivinylpentasiloxane, and
1,1,2,3,4,5,5-heptamethylpentavinylpentasiloxane,

Examples of branched non-cyclic siloxanes are:
tetrakis dimethylsiloxysilane, and
tetrakis dimethylvinylsiloxysilane

Examples of silanes (i.e, m is zero in formula (2)) are:
tetravinylsilane,
trivinylsilane,
divinylsilane,
trivinylmethylsilane,
divinylmethylsilane,
silane (SiH₄),
vinylsilane,
divinyldiethylsilane,
diphenyldivinylsilane,
phenylsilane,
methylphenylsilane,
diphenylsilane,
2-propenyldimethylsilane,
1 -propenyldimethylsilane,
3-propenyldimethylsilane,
4-but-2-enyldiethylsilane,
p-tolylsilane, and
p-tolyldivinylsilane

It will be understood by those skilled in the art that while the siloxane monomers may be pure species, it will be frequently desirable to use mixtures of such monomers, in which a single species is predominant. Mixtures in which the tetramers predominate have been found particularly useful.

While the reaction works best if platinum is the hydrosilylation catalyst, other catalysts such as cobalt and manganese carbonyl will perform adequately. The catalyst can be dispersed as a solid or can be used as a solution when added to the cyclosiloxane monomer. With platinum, about 1 to 200 wt. ppm, preferably 1 to 30 wt. ppm will be employed as the catalyst.

Black glass precursor polymer may be prepared from either bulk or solution polymerization. In bulk polymerization, neat monomer liquid, i.e., without the presence of solvents reacts to form oligomers or high molecular weight polymers. In bulk polymerization, a solid gel can be formed without entrapping solvent. It is particularly useful for impregnating porous composites to increase density. Solution polymerization refers to polymerizing monomers in the presence of an unreactive solvent. Resin used in impregnating fibers to form prepreg in our invention preferably is prepared by solution polymerization. The advantage of solution polymerization is the ease of controlling resin characteristics. It is possible but very difficult to produce B-stage resin suitable for prepregs with consistent characteristics by bulk polymerization. In the present invention, soluble resin with the desirable viscosity, tackiness, and flowability suitable for prepregging and laminating can be obtained consistently using solution polymerization process. The production of easily handleable and consistent resin is very critical in composite fabrication.

### Fibers

Reinforcing fibers useful in the composites of the invention are boron-containing refractory fibers used for applications where superior physical properties are needed. They include such materials as the Nextel™ fibers available from 3M which are typically 62-70% Al₂O₃ and 24-28% SiO₂ and contain 2 to 14 wt.% boria (B₂O₃). The larger amounts of boria are preferred, say from 12 to 14 wt.%.

The fibers may have various sizes and forms. They may be monofilaments from 1 µm to 200 µm diameter, chopped filaments or whiskers, or tows of 200 to 2000 filaments. When used in composites of the invention they may be woven into fabrics, pressed into mats, or unidirectionally aligned with the fibers oriented as desired to obtain the needed physical properties.

An important factor in the performance of the black glass composites is the bond between the fibers and the black glass matrix. Consequently, where improved tensile strength at high temperatures is desired, the fibers are nitrided to produce a surface enriched in boron nitride which reduces the bonding between the fibers and the black glass matrix. The surface sizings found on fibers as received or produced may be removed by solvent washing or heat treatment and the boron nitride enrichment developed by nitridation. The process described in U.S. 4,605,588 and U.S. 4,948,662 recommends a temperature of at least about 2200°F (1204°C) and preferably between 2200-2600°F (1204°C-1426°C) so that boron diffuses to the surface of the fiber and reacts with NH₃ to form boron nitride. We have now found that in order to prepare black glass composites which fail in a fibrous manner that much lower temperatures are needed, particularly in the range of about 1125°C to 1250°C, preferably 1125°C to 1175°C. In fact, at the higher temperatures previously recommended, the black glass composites fail by brittle fracture. The composition of the nitriding gas is 5-100% NH₃, preferably 80 to 95% H₂ + N₂ and 5 to 20% NH₃. The reaction time is 10 to 70 minutes, most preferably between 10 and 40 minutes at the selected temperature. The boron nitride produced is not visible even under conditions which would show ordinary thin surface coatings. However, the effect of enriching the surface of the fibers is seen (see Example 4 below), even though the boron nitride itself is not.

In co-pending applications Serial Nos. 07/464,470 and 07/523,620 it is shown that coating reinforcing fibers with carbon provides an interfacial bond between the fibers and the matrix which induces graceful failure under stress and fibrous fracture. However, the carbon interface becomes unstable in an oxidizing atmosphere at above about 400°C as oxidation of the carbon takes place. The boron nitride enriched surface of the present invention is stable up to about 600-700°C where a carbon interfacial coating is not useful for continuous exposure.

### Processing

As previously discussed, the black glass precursor is a polymer. It may be shaped into fibers and combined with reinforcing fibers or the black glass precursor may be used in solution for coating or impregnating reinforcing fibers. Various methods will suggest themselves to those skilled in the art for combining the black glass precursor with boron nitride-enriched reinforcing fibers. It would, for example, be feasible to combine fibers of the precursor polymer with fibers of the reinforcing material and then to coat the resulting fabric or mat. Alternatively, the reinforcing fibers could be coated with a solution of the precursor polymer and then formed into the desired shape. Coating could be done by dipping, spraying, brushing, or the like. In still another embodiment, the resin transfer technique can be employed in which the reinforcing fibers are placed in a mold and then the black glass precursor is added to fill the mold before curing to form a green molded product.

In one method, a continuous fiber is coated with a solution of the black glass precursor polymer and then wound on a rotating drum covered with a release film which is easily separated from the coated fibers. After sufficient fiber has been built up on the drum, the process is stopped and the uni-directional fiber mat removed from the drum and dried. The resulting mat (i.e., "prepreg") then may be cut and laminated into the desired shapes. Alternatively, many continuous fibers may be coated, aligned in parallel, and then passed through a drying oven to form a continuous reinforced tape coated with black glass precursor.

In a second method, a woven or pressed fabric of the reinforcing fibers is infiltrated with a solution of the black glass precursor polymer and then dried, after which it may be formed into the desired shapes by procedures which are familiar to those skilled in the art of fabricating structures with the prepreg sheets. For example, layers of prepreg sheets may be laid together and pressed into the needed shape. The orientation of the fibers may be chosen to strengthen the composite part in the principal load-bearing directions.

A third method for fabricating the polymer composite is by resin transfer molding. In resin transfer molding a mold with the required shape is filled with the desired reinforcement material. The reinforcement could be a preform having a 3-dimensional weave of fibers, a lay-up of fabric plies, a non-woven mat of chopped staple or bundled tows, or assemblies of whiskers, and such others as are familiar to those skilled in the art. The reinforcement material would be nitrided to produce an enriched surface of boron nitride to insure a weak bond between matrix and reinforcement in the final composite where improved tensile strength is desired. The filled mold is injected, preferably under vacuum, with the neat monomer solution with an appropriate amount of catalyst. The relative amounts of vinyl- and hydro-monomers will be adjusted to obtain the desired carbon level in the pyrolyzed matrix. The low viscosity i.e. <50 cp (mPa·s) of the neat monomer solution is exceptionally well suited for resin impregnation of thick wall and complex shape components. A neat liquid of intermediate viscosity between about 50-1000 cp (mPa·s) may also be used for impregnation of thin wall and hollow parts, such as tube, cylinder, honeycomb, and fin structures. This intermediate viscosity liquid may be produced by controlled partial polymerization ofthe monomers.

The filled mold is then heated to about 30°C-150°C for about ½-30 hours as required to cure the monomer solutions to a polymerized state. The specific cure cycle is tailored for the geometry and desired state of cure. For example, thicker wall sections require slower cures to prevent uneven curing and heat build-up due to the exothermic curing reaction. The cure cycle is tailored through control of the amount of catalyst added and the time-temperature cycle. External pressure may be used during the heating cycle as desired.

When the component is fully cured, it is removed from the mold. In this condition it is in a state equivalent to the composite made by lamination and autoclaving of prepreg plies. Further processing consists of the equivalent pyrolysis and impregnation cycles to be described for the laminated components.

Solvents for the black glass precursor polymers include hydrocarbons, such as octane, hexane, toluene, benzene, and xylene, and ethers, such as tetrahydrofuran, and halogenated compounds such as chloroform and carbon tetrachloride. Concentration of the prepregging solution may vary from about 10% to about 70% of resin by weight. Precursor polymer used in impregnating the fibers is usually prepared from solution polymerization of the respective monomers.

Since the precursor polymers do not contain any hydrolyzable functional groups, such as silanol, chlorosilane, or alkoxysilane, the precursor polymer is not water sensitive. No particular precaution is needed to exclude water from the solvent or to control relative humidity during processing.

The resin ages very slowly when stored at or below room temperatures as is evident from their shelf life of more than three months at these temperatures. The resin is stable both in the solution or in the prepreg. Prepregs stored in a refrigerator for three months have been used to make laminates without any difficulty. Also, resin solutions stored for months have been used for making prepregs successfully.

large and complex shape components can be fabricated from laminating prepregs. One method is hand lay-up which involves placing the resin-impregnated prepregs manually in an open mold. Several plies of prepregs cut to the desired shape are laid-up to achieve the required thickness of the component. Fiber orientation can be tailored to give maximum strength in the preferred direction. Fibers can be oriented unidirectionally [0], at 90° angles [0/90], at 45° angles [0/45 or 45/90], and in other combinations as desired. The laid-up plies are then bonded by vacuum compaction before autoclave curing. Another fabrication method is tape laying which uses pre-impregnated ribbons in forming composites. The resins can be controlled to provide the desired tackiness and viscosity in the prepreg for the lay-up procedures.

After the initial forming, the composites may be consolidated and cured by heating to temperatures up to about 250°C under pressure. In one method, the composited prepreg is placed in a bag, which is then evacuated and the outside of the bag placed under a pressure sufficient to bond the layered prepreg, say up to about 1482 kPa. The resin can flow into and fill up any voids between the fibers, forming a void-free green laminate. The resulting polymer-fiber composite is dense and is ready for conversion of the polymer to black glass ceramic. If an excessively cured prepreg is used, there will be no adhesion between the plies and no flow of resin material and no bonding will occur.

Heating the composite to temperatures from about 800°C up to about 1400°C preferably in a non-oxidizing atmosphere (pyrolysis) converts the polymer into a black glass ceramic containing essentially only carbon, silicon, and oxygen. If oxygen is present, rapid heating at a rate of least 5°C/min is needed to limit the oxidation of carbon. It is characteristic of the black glass prepared by pyrolyzing the cyclosiloxanes described above that the resulting black glass has a large carbon content, but is able to withstand exposure to temperatures up to about 1400°C in air without oxidizing to a significant degree. Pyrolysis is usually carried out by heating to the maximum temperature selected, holding at that temperature for a period of time determined by the size of the structure, and then cooling to room temperature. Little bulk shrinkage is observed for the black glass composites and the resulting structure typically has about 70-80% of its theoretical density.

Conversion of the polymer to black glass takes place between 430 °C and 950°C. Three major pyrolysis steps were identified by thermogravimetric analysis at 430°C-700°C, 680°C-800°C and 780°C-950°C. The yield of the polymer-glass conversion up to 800°C is about 83%; the third pyrolysis mechanism occurring between 780°C and 950°C contributed a final 2.5% weight loss to the final product.

Since the pyrolyzed composite structure still retains voids, the structure may be increased in density by impregnating with a neat monomer liquid or solution of the black glass precursor polymer. The solution is then gelled by heating to about 50°C-120°C for a sufficient period of time. Following gelation, the polymer is pyrolyzed as described above. Repeating these steps, it is feasible to increase the density up to about 95% ofthe theoretical.

It has been shown in co-pending applications 07/464,470 and 07/523,620 that the high temperature strength of composites can be substantially improved by continued impregnation of the composite with black glass solutions, which is believed to seal off micropores in the black glass coating making it possible to defend the coating on the fibers against destructive oxidation.

The examples below illustrate the improved strength and strength retention after high temperature exposure obtained by nitriding a boron-containing fiber and forming a surface enriched in boron nitride prior to contacting them with the black glass precursors. The examples further show the improved physical properties of composites which have been briefly oxidized before use or testing.

The oxidation is carried out under controlled conditions at a temperature up to 800°C for 5 to 200 hours, generally 500° to 800°C, preferably 600°C to 700°C for 24 to 100 hours, as selected to provide the improved properties sought.

### Example 1

### Polymer Precursor Preparation

The cyclosiloxane having a silicon-vinyl bond was poly(vinylmethylcyclosiloxane) (ViSi). The cyclosiloxane with a silicon-hydride bond was poly(methylhydrocyclosiloxane) (HSi). Both cyclosiloxanes were mixtures of oligomers, about 85% by weight being the cyclotetramer with the remainder being principally the cyclopentamer and cyclohexamer. A mixture of 59 vol.% ViSi/41 vol.% HSi was mixed with 0.6 vol.% of a platinum-cyclovinylmethylsiloxane complex having 0.6 wt.% pt. The mixture was diluted with isooctane to give a 10 vol.% solution of the cyclosiloxane monomers. The solution was heated to reflux conditions (100°C) and refluxed for about 70 minutes. Then, the solution was concentrated in a rotary evaporator at 50°C to a concentration suitable for use in prepregging. The resin produced was poly(methylmethylenecyclosiloxane) (PMMCS). It was tacky at room temperature, but it was flowable at temperatures of about 70°C or higher and thus suitable for use as a B-stage resin.

### Example 2

### Nitridation of a Nextel™ 312 Fabric

Strips of Nextel™ 312 (boria-alumina silicate supplied by 3M) five harness satin weave fabric 4 inches x 36 inches (101.6 mm x 914.4 mm) were desized by heating to 600°C in air for 1 hour in a tube furnace and then heated at temperatures between 1100°C and 1250°C for times between 10 and 75 minutes. A gas containing 84 vol.% N₂, 11 vol.% H₂, and 5 vol.% NH₃ was passed through the furnace during the periods when the temperature was being raised and then held at the desired maximum. After treatment, the furnace was cooled while dry N₂ was passed through. The treated fabrics were then used to make a reinforced black glass ceramic.

### Example 3

### Preparation of Test Specimens

A 45-60 wt.% poly(methylmethylenecyclosiloxane) (PMMCS) solution in isooctane was used for making a prepreg. Boron nitride enriched Nextel™ fibers prepared as in Example 2 were impregnated with the PMMCS resin by passing the fabric strip through the resin solution and drying in air for 16 hours. The prepreg contained 40-45% by weight of PMMCS and 60-55% by weight fiber. The fiber areal weight, which is defined as the weight of fiber per unit aura in the prepreg, was 254.3 gm/m².

4 inches x 4 inches (102 mm x 102 mm) plies were cut from the prepreg. 8 plies were laid-up to form a laminate. This laminate was placed in a vacuum bag and consolidated in an autoclave using the following procedure:
1. debulking at 65°C for In hour under vacuum,
2. heating up to 150°C at 100 psig (689.7 kPa gauge) nitrogen pressure over 1 hour, and holding at 150°C for 15 minutes,
3. cooling to 70°C while maintaining the pressure,
4. releasing the pressure and free cooling to room temperature.
The resin flowed and solidified during the autoclave curing. Loss of the resin through bleeding was estimated to be less than 2% with respect to the total weight of the laminate.

The consolidated green laminate was then machine cut into 0.25 inches x 3 inches (6.4 mm x 76.2 mm) test bars with average thickness of 0.07 inches (1.78 mm). The green test bars were then pyrolyzed in flowing nitrogen (flowrate = ca. 500 cubic cm per minute) to convert the PMMCS into black glass matrix composites using the following heating program:
1. heat to 480°C at 2°C/min,
2. hold at 480°C for 2 hours,
3. heat from 480°C to 900°C at 1.5°C/min,
4. cool to room temperature at 3.5°C/min.
The density of the as-pyrolyzed test bars was 1.5 gm/cc with a char yield of 82.7%. The test bars were then infiltrated with the neat monomer liquid without solvent. After gelling the sol at 55°C, the infiltrated bars were then pyrolyzed by heating in nitrogen atmosphere at 90°C/hr to 900°C, held for 0.5 hrs. and then cooled to room temperature at 300°C/min. A total of five impregnations were used to increase the density of the composite to about 1.99 gm/cc. Bars impregnated five times contained 30-50% Nextel™ fiber by volume. Open porosity was estimated to be about 10%.

### Example 4

### Testing for Flexural Strength

Three-point bend tests were performed on the nitrided Nextel™ 312 fiber reinforced black glass bars prepared in Example 3 using an Instron 4507 universal testing machine. The span of the fixture was 2.75 inches (69.9 mm) and the cross-head speed was 0.5 mm/min. Flexural strengths for various nitridation temperatures and times are summarized below.

**Table A**

| Nitriding Conditions | F. Stress | F. Strain | Failure Mode |
|---|---|---|---|
| 1250°C/10 minutes | 28 Kpsi(193 MPa) | 0.38% | Fibrous |
| 1250°C/20 minutes | 29 Kpsi(200 MPa) | 0.29% | Fibrous |
| 1250°C/35 minutes | 20 Kpsi(138 MPa) | 0.26% | Semi-Fibrous |
| 1250°C/50 minutes | 15 Kpsi(103 MPa) | 0.23% | Semi-Fibrous |
| 1250°C/75 minutes | 12 Kpsi(83 MPa) | 0.14% | Brittle |
| 1225°C/20 minutes | 28 Kpsi(193 MPa) | 0.31% | Fibrous |
| 1225°C/35 minutes | 29 Kpsi (200 MPa) | 0.30% | Fibrous |
| 1225°C/50 minutes | 29Kpsi(200 MPa) | 0.29% | Semi-Fibrous |
| 1200°C/20 minutes | 26 Kpsi(179 MPa) | 0.35% | Fibrous |
| 1200°C/40 minutes | 25 Kpsi(172 MPa) | 0.37% | Fibrous |
| 1200°C/70 minutes | 24 Kpsi(165 MPa) | 0.31% | Fibrous |
| 1175°C/35 minutes | 29 Kpsi(200 MPa) | 0.38% | Fibrous |
| 1150°C/35 minutes | 30 Kpsi(207 MPa) | 0.34% | Fibrous |
| 1125°C/35 minutes | 31 Kpsi(214 MPa) | 0.40% | Fibrous |
| 1100°C/35 minutes | 15 Kpsi(103 MPa) | 0.16% | Brittle |

The results shown in Table A suggest the following conclusions:
- increasing nitriding temperature causes a reduction in the stress which a composite can accept before failure; therefore, the temperature should be kept as low as possible.
- increasing nitriding time at a given temperature reduces the stress which a composite can accept before failure; therefore, the nitriding time should be kept as short as possible
- the failure mode is adversely affected by an increase in nitriding severity, i.e. by increasing temperature and/or time; therefore nitriding conditions should be as mild as possible while retaining a fibrous failure mode.
- if nitriding conditions are too mild brittle failure occurs, which may be attributed to insufficient enrichment of the fibers with boron nitride.
It may also be concluded that the nitriding conditions recommended in the '588 and '662 patents are not applicable to composites made with black glass (silicon carboxide). The objective of the nitriding treatment is to provide fibers which do not adhere strongly to the brick glass matrix and therefore exhibit fibrous failure. Strong attachment of the fibers to the matrix will result in brittle failure, but so will nitriding the fibers to such as extent that they lose strength.

### Example 5

Nextel™ 312 fibers nitrided at 1135°C for 35 minutes were used to prepare composites for testing according to the method of Example 3. Thereafter, the samples were oxidized in stagnant air and then tested as described in Example 4. The results are shown in the following table.

**Table B**

| Oxidation | | Stress MPa | Strain % | Modulus GPa | Wgt. Loss % |
|---|---|---|---|---|---|
| °C | Hours | | | | |
| None | | 181 | 0.39 | 55.2 | - |
| 600 | 5 | 232 | 0.48 | 50.7 | 0.37 |
| 600 | 20 | 223 | 0.59 | 40.4 | 0.87 |
| 600 | 100 | 175 | 0.62 | 31.5 | 2.06 |
| 700 | 5 | 213 | 0.47 | 46.6 | 0.61 |
| 700 | 20 | 183 | 0.74 | 28.8 | 2.04 |
| 700 | 100 | 134 | 0.68 | 23.3 | - |
| 800 | 5 | 175 | 0.60 | 32.2 | 1.41 |

### Example 6

Nextel™ 312 reinforced black glass composites were fabricated using standard procedures as described in Example 3 from sixteen plys of Nextel™ 312 fabric that had been treated in a gas described in Example 2 at 1150°C for 30 minutes. The matrix for these composites was prepared from reacting poly(vinylmethylcyclosiloxane) with polyhydromethylsiloxane using procedure as described in Example 1. Five infiltration cycles were used to densify the composites. The infiltration liquid was poly(vinylmethylcyclosiloxane) and 44 wt.% polyhydromethyl siloxane without solvent.

Specimens were prepared for tensile testing and for four-point flexure testing. Five tensile specimens were tested in the "as-prepared" state and five specimens were subjected to an oxidizing environment consisting of flowing air at 600°C for 24 hours. One flexure specimen was tested in the "as-prepared " state and two specimens affer the same oxidation treatment.

The results of the testing are described in the following table:

**Table C**

| Test Type | Oxidation Treatment | Failure Stress, ksi | Failure Strain, % |
|---|---|---|---|
| Tensile | no | 12.6 | 0.25 |
| Tensile | yes | 14.0 | 0.23 |
| Flexure | no | 26.6 | 0.47 |
| Flexure | yes | 29.1 | 0.60 |

Scanning electron microscope images were obtained of the fracture surfaces for representative samples of the composites tested. These images indicated a distinct change in the failure mode near the surface of the composites. For the as-prepared tensile specimens, no extensive fiber pull-out was observed. For the composite that had been oxidized, extensive fiber pull-out was observed, but only near the regions near the exterior surfaces. A similar effect was noted on the flexure specimens.

The observation that fiber pull-out was only observed near the surface suggests that the time or temperature of the oxidation was not sufficient to change the structure of the fiber/matrix interface completely through the composite.

### Example 7

Nextel™ 312 reinforced black glass composites were fabricated using the procedures described in Example 6.

Four point flexure specimens were prepared. Samples of these were subjected to oxidation in flowing air at 600°C for times up to 200 hours. The results of these tests are shown in the following table:

**Table D**

| Oxidation Time hours | Number of Samples | Failure Stress ksi | Failure Strain % | Modulus msi |
|---|---|---|---|---|
| as-prepared | 4 | 28.8 | 0.5 | 7.13 |
| 20 | 3 | 30.8 | 0.5 | 7.23 |
| 50 | 3 | 32.2 | 0.6 | 6.34 |
| 111 | 4 | 31.4 | 0.7 | 5.56 |
| 200 | 4 | 26.0 | 0.6 | 4.30 |

These data indicate that an oxidation time of 200 hours degraded the properties of the composite.

### Example 8

Nextel™ 312 fibers were treated at the preferred nitridation conditions, i.e. 1175°C for 35 minutes. A sample of these fibers was subjected to a flowing air stream for 100 hours at 600°C. Both fibers were analyzed by XPS. The data are shown in the following table:

**Table E**

| Element | As-Prepared Atomic % | Ratio to B | After Oxidation Atomic % | Ratio to B |
|---|---|---|---|---|
| B 1s | 31.74 | 1 | 28.01 | 1 |
| O 1s | 9.02 | 0.28 | 14.69 | 0.52 |
| Al 2p | 1.02 | 0.032 | 5.76 | 0.21 |
| N 1s | 34.32 | 1.08 | 25.34 | 0.90 |
| Si 2p | 1.57 | 0.05 | 5.12 | 0.18 |
| C 1s | 22.33 | 0.70 | 21.08 | 0.75 |

This comparison shows that the nitrogen-to-boron ratio stays at about the same level. However, the effect of the oxidation appears to reduce the surface concentration of boron and nitrogen on the fiber as evidenced by the increased amount (relative to boron) of silicon and aluminum present on the surface.

## Claims

1. A fiber reinforced glass composite comprising
(a) boron-containing refractory fibers having a surface enriched in boron nitride provided by nitriding said fibers at a temperature of about 1125°C to 1250°C with a gas containing 5-100% NH₃ for 10 to 70 minutes;
(b) a carbon-containing black glass ceramic composition having the empirical formula SiCxOy wherein x ranges from about 0.5 to about 2.0 and y ranges from about 0.5 to about 3.0.

2. A composite of Claim 1 wherein said fibers are nitrided at a temperature of 1125°C to 1175°C for 10 to 40 minutes.

3. The composite of Claim 1 wherein said black glass ceramic composition (b) is the pyrolyzed reaction product of
(1) a cyclosiloxane monomer having the formula 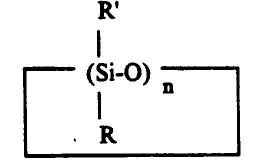 where n is an integer from 3 to 30, R is hydrogen, and R' is an alkene of from 2 to 20 carbon atoms in which one vinyl carbon atom is directly bonded to silicon or
(2) two or more different cyclosiloxane monomers having the formula of (1)
where for at least one monomer R is hydrogen and
R' is an alkyl group having from 1 to 20 carbon atoms and for the other monomers R is an alkene from 2 to about 20 carbon atoms in which one vinyl carbon is directly bonded to silicon and R' is an alkyl group of from 1 to about 20 carbon atoms or
(3) cyclosiloxane monomers having the formula of (1) where R and R' are independently selected from hydrogen, an alkene of from 2 to about 20 carbon atoms in which one vinyl carbon atom is directly bonded to silicon, or an alkyl group of from 1 to about 20 carbon atoms and at least some of said monomers contain each of said hydrogen, alkene, and alkyl moieties, said reaction taking place in the presence of an effective amount of hydrosilylation catalyst.

4. The composite of Claim 1 wherein said black glass ceramic composition (b) is the pyrolyzed reaction production of
(1) cyclosiloxanes of the formula 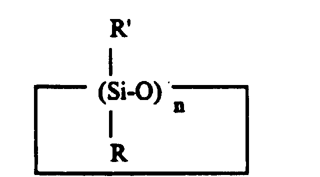 where
n is an integer from 3 to about 20,
R and R' are independently selected from hydrogen,
an unsubstituted vinyl group, a substituted vinyl group, an alkyl group having 1 to 20 carbon atoms, or aryl and where said siloxane contains at least two of either or both of hydrogen and substituted or unsubstituted vinyl groups and
(2) non-cyclic siloxanes having the formula 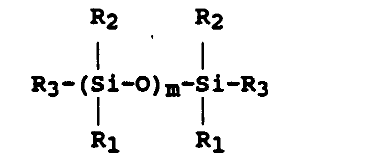 where
R₁, R₂, and R₃ are independently selected from hydrogen, an unsubstituted vinyl group, a substituted vinyl group, an alkyl group having 1 to 20 carbon atoms, or aryl and where said siloxane contains at least two of either or both of hydrogen and unsubstituted or substituted vinyl groups
m is an integer from 0 to 1,000.
The reaction of (1) and (2) taking place in the presence of an effective amount of a hydrosilylation catalyst.

5. The fiber reinforced glass composite of Claim 1 wherein the boron-containing refractory fibers are boron-containing aluminosilicate fibers containing 2-14 wt.% boria.

6. A fiber reinforced composite of Claim 1 oxidized at a temperature up to 800°C for 5 to 200 hours to improve the stress-strain properties of said composite.

7. A fiber reinforced composite of claim 6 oxidized at a temperature of 600 to 700°C for 20 to 100 hours.

8. A fiber reinforced composite comprising
(a) boron-containing refractory fibers having a surface enriched in boron nitride provided by nitriding said fibers at a temperature of about 1125°C to 1250°C with a gas containing 5 to 100% NH₃ for 10 to 70 minutes;
(b) a ceramic matrix for said fibers of (a).

9. A method of enriching the surface of the boron-containing fibers of claim 1 with boron nitride, the method comprising exposing said fibers to a temperature of about 1125°C to 1250°C in the presence of a gas containing 5 to 100% NH₃ for 10 to 70 minutes.

## Patentansprüche

1. Faserverstärkter Glasverbundwerkstoff, enthaltend
(a) borhaltige feuerfeste Fasern mit einer mit Bornitrid angereicherten Oberfläche, hergestellt durch 10 bis 70 Minuten langes Nitridieren der Fasern mit einem 5-100% NH₃ enthaltenden Gas bei einer Temperatur von etwa 1125°C bis 1250°C;
(b) eine kohlenstoffhaltige Schwarzglaskeramikzusammensetzung mit der Summenformel SiCxOy, worin x im Bereich von etwa 0,5 bis etwa 2,0 und y im Bereich von etwa 0,5 bis etwa 3,0 liegt.

2. Verbundwerkstoff nach Anspruch 1, wobei die Fasern bei einer Temperatur von 1125°C bis 1175°C 10 bis 40 Minuten lang nitridiert werden.

3. Verbundwerkstoff nach Anspruch 1, wobei es sich bei der Schwarzglaskeramikzusammensetzung (b) um das pyrolysierte Reaktionsprodukt aus
(1) einem Cyclosiloxan-Monomer mit der Formel 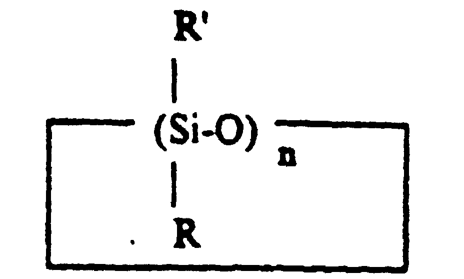 worin n eine ganze Zahl von 3 bis 30 ist, R Wasserstoff und R' ein Alken mit 2 bis 20 Kohlenstoffatomen bedeutet, wobei ein Vinylkohlenstoffatom direkt an Silicium gebunden ist, oder
(2) zwei oder mehr verschiedenen Cyclosiloxan-Monomeren der Formel (1),
wobei bei mindestens einem Monomer R Wasserstoff und R' eine Alkylgruppe mit 1 bis 20 Kohlenstoffatomen bedeutet und bei den anderen Monomeren R ein Alken mit 2 bis etwa 20 Kohlenstoffatomen, wobei ein Vinylkohlenstoffatom direkt an Silicium gebunden ist, und R' eine Alkylgruppe mit 1 bis etwa 20 Kohlenstoffatomen bedeutet, oder
(3) Cyclosiloxan-Monomeren der Formel (1), worin R und R' unabhängig voneinander aus Wasserstoff, einem Alken mit 2 bis etwa 20 Kohlenstoffatomen, wobei ein Vinylkohlenstoffatom direkt an Silicium gebunden ist, oder einer Alkylgruppe mit 1 bis etwa 20 Kohlenstoffatomen ausgewählt sind und mindestens einige dieser Monomere jeweils Wasserstoff-, Alken- und Alkylgruppierungen enthalten, wobei die Reaktion in Gegenwart einer wirksamen Menge eines Hydrosilylierungskatalysators stattfindet,
handelt.

4. Verbundwerkstoff nach Anspruch 1, wobei es sich bei der Schwarzglaskeramikzusammensetzung (b) um das pyrolysierte Reaktionsprodukt aus
(1) Cyclosiloxanen mit der Formel 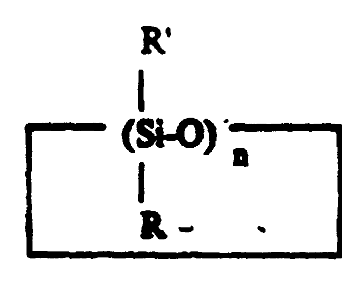 worin
n eine ganze Zahl von 3 bis etwa 20 ist,
R und R' unabhängig voneinander unter Wasserstoff, einer unsubsituierten Vinylgruppe, einer substituierten Vinylgruppe, einer Alkylgruppe mit 1 bis 20 Kohlenatoffatomen oder Aryl ausgewählt sind und das Siloxan mindestens zwei Wasserstoff- und/oder gegebenenfalls substituierte Vinylgruppen enthält, und
(2) nichtcyclischen Siloxanen mit der Formel 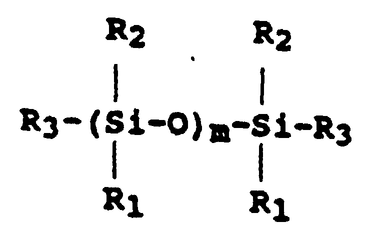 worin
R₁, R₂ und R₃ unabhängig voneinander unter Wasserstoff, einer unsubsituierten Vinylgruppe, einer substituierten Vinylgruppe, einer Alkylgruppe mit 1 bis 20 Kohlenstoffatomen oder Aryl ausgewählt sind und das Siloxan mindestens zwei Wasserstoff- und/oder gegebenenfalls substituierte Vinylgruppen enthält und
m eine ganze Zahl von 0 bis 1.000 ist,
wobei die Reaktion von (1) und (2) in Gegenwart einer wirksamen Menge eines Hydrosilylierungskatalysators stattfindet, handelt.

5. Faserverstärkter Verbundwerkstoff nach Anspruch 1, wobei es sich bei den borhaltigen feuerfesten Fasern um borhaltige Alumosilicatfasern mit 2-14 Gew.-% Boroxid handelt.

6. Faserverstärkter Verbundwerkstoff nach Anspruch 1, der zur Verbesserung seiner Spannungs-Dehnungs-Eigenschaften bei einer Temperatur von bis zu 800°C 5 bis 200 Stunden lang oxidiert worden ist.

7. Faserverstärkter Verbundwerkstoff nach Anspruch 6, der bei einer Temperatur von 600 bis 700°C 20 bis 100 Stunden lang oxidiert worden ist.

8. Faserverstärkter Verbundwerkstoff, enthaltend
(a) borhaltige feuerfeste Fasern mit einer mit Bornitrid angereicherten Oberfläche, hergestellt durch 10 bis 70 Minuten langes Nitridieren der Fasern mit einem 5-100% NH₃ enthaltenden Gas bei einer Temperatur von etwa 1125°C bis 1250°C;
(b) eine Keramikmatrix für die Fasern gemäß (a).

9. Verfahren zur Anreicherung der Oberfläche der borhaltigen Fasern nach Anspruch 1 mit Bornitrid, bei dem man die Fasern in Gegenwart eines 5-100% NH₃ enthaltenden Gases 10 bis 70 Minuten lang einer Temperatur von etwa 1125°C bis 1250°C aussetzt.

## Revendications

1. Composite de verre renforcé par des fibres comprenant
(a) des fibres réfractaires contenant du bore ayant une surface enrichie en nitrure de bore fournie en nitrurant lesdites fibres à une température d'environ 1125°C à 1250°C avec un gaz contenant 5-100% de NH₃ pendant 10 à 70 minutes;
(b) une composition céramique de verre noir contenant du carbone ayant la formule brute SiCxOy dans laquelle x s'échelonne d'environ 0,5 à environ 2,0 et y s'échelonne d'environ 0,5 à environ 3,0.

2. Composite selon la revendication 1, dans lequel lesdites fibres sont nitrurées à une température de 1125°C à 1175°C pendant 10 à 40 minutes.

3. Composite selon la revendication 1, dans lequel ladite composition céramique de verre noir (b) est le produit de réaction pyrolysé de
(1) un monomère cyclosiloxane ayant la formule 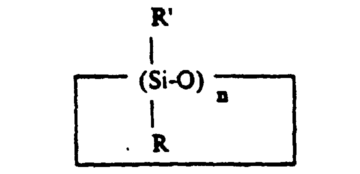 dans laquelle n est un entier de 3 à 30, R est l'hydrogène, et R' est un alcène de 2 à 20 atomes de carbone dans lequel un atome de carbone vinylique est directement lié au silicium ou
(2) deux monomères cyclosiloxane différents ou plus ayant la formule de (1)
dans laquelle pour au moins un monomère, R est l'hydrogène et R' est un groupe alkyle ayant de 1 à 20 atomes de carbone, et pour les autres monomères, R est un alcène de 2 à environ 20 atomes de carbone dans lequel un carbone vinylique est directement lié au silicium et R' est un groupe alkyle de 1 à environ 20 atomes de carbone ou
(3) des monomères cyclosiloxane ayant la formule de (1) dans laquelle R et R' sont indépendamment choisis parmi l'hydrogène, un alcène de 2 à environ 20 atomes de carbone dans lequel un atome de carbone vinylique est directement lié au silicium, ou un groupe alkyle de 1 à environ 20 atomes de carbone, et au moins certains desdits monomères contiennent chacun desdits hydrogène, alcène, et groupements alkyle, ladite réaction ayant lieu en présence d'une quantité efficace d'un catalyseur d'hydrosilylation.

4. Composite selon la revendication 1, dans lequel ladite composition céramique de verre noir (b) est le produit de réaction pyrolysé de
(1) des cyclosiloxanes de formule 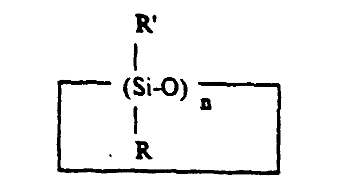 dans laquelle n est un entier de 3 à environ 20, R et R' sont indépendamment choisis parmi l'hydrogène, un groupe vinyle non substitué, un groupe vinyle substitué, un groupe alkyle ayant 1 à 20 atomes de carbone, ou un aryle, et où ledit siloxane contient au moins deux de l'un ou des deux parmi l'hydrogène et des groupes vinyle substitués ou non substitués et
(2) des siloxanes non cycliques ayant la formule 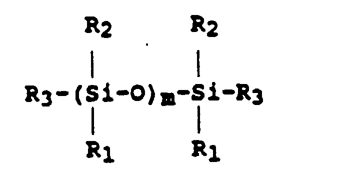 dans laquelle
R₁, R₂, et R₃ sont indépendamment choisis parmi
l'hydrogène, un groupe vinyle non substitué, un groupe vinyle substitué, un groupe alkyle ayant 1 à 20 atomes de carbone, ou un aryle, et où ledit siloxane contient au moins deux de l'un ou des deux parmi l'hydrogène et des groupes vinyle non substitués ou substitués
m est un entier de 0 à 1 000,
La réaction de (1) et de (2) ayant lieu en présence d'une quantité efficace d'un catalyseur d'hydrosilylation.

5. Composite de verre renforcé par des fibres selon la revendication 1, dans lequel les fibres réfractaires contenant du bore sont des fibres d'aluminosilicate contenant du bore, contenant 2-14% en poids d'oxyde de bore.

6. Composite renforcé par des fibres selon la revendication 1, oxydé à une température allant jusqu'à 800°C pendant 5 à 200 heures pour améliorer les propriétés contrainte-déformation dudit composite.

7. Composite renforcé par des fibres selon la revendication 6, oxydé à une température de 600 à 700°C pendant 20 à 100 heures.

8. Composite renforcé par des fibres comprenant
(a) des fibres réfractaires contenant du bore ayant une surface enrichie en nitrure de bore fournie en nitrurant lesdites fibres à une température d'environ 1125°C à 1250°C avec un gaz contenant de 5 à 100% de NH₃ pendant 10 à 70 minutes;
(b) une matrice céramique pour lesdites fibres de (a).

9. Procédé d'enrichissement de la surface des fibres contenant du bore selon la revendication 1 avec du nitrure de bore, le procédé comprenant l'exposition desdites fibres à une température d'environ 1125°C à 1250°C en présence d'un gaz contenant de 5 à 100% de NH₃ pendant 10 à 70 minutes.
